# EUROPEAN PATENT SPECIFICATION

(11) **EP 1 452 063 B1**
(45) Date of publication and mention of the grant of the patent: **02.08.2006**
(21) Application number: 02801468.6
(22) Date of filing: 16.10.2002
(51) Int. Cl.: H04Q 7/38, H04L 12/56

(54) **A HANDOVER METHOD**
WEITERREICHUNGSVERFAHREN
PROCEDE DE TRANSFERT

(30) Priority: 17.10.2001 GB 0124958
(43) Date of publication of application: 01.09.2004
(73) Proprietor: Nokia Corporation, 02150 Espoo (FI)
(72) Inventor: SEBIRE, Guillaume, FIN-00330 Helsinki (FI); HAMITI, Shkumbin, FIN-02230 Espoo (FI); PARANTAINEN, Janne, FIN-00500 Helsinki (FI)
(74) Representative: Style, Kelda Camilla Karen
(86) International application number: PCT/IB2002/004293
(87) International publication number: WO 2003/034766

(56) References cited:
- WO-A-00/79808

## Description

### Field of the Invention

The present invention relates to a method of handover. In particular, but not exclusively, the present invention relates to a method of handing over user equipment, for example, a mobile station from one cell to another cell of a cellular communications network. The mobile station may send and/or receive packets of data.

### Background to the Invention

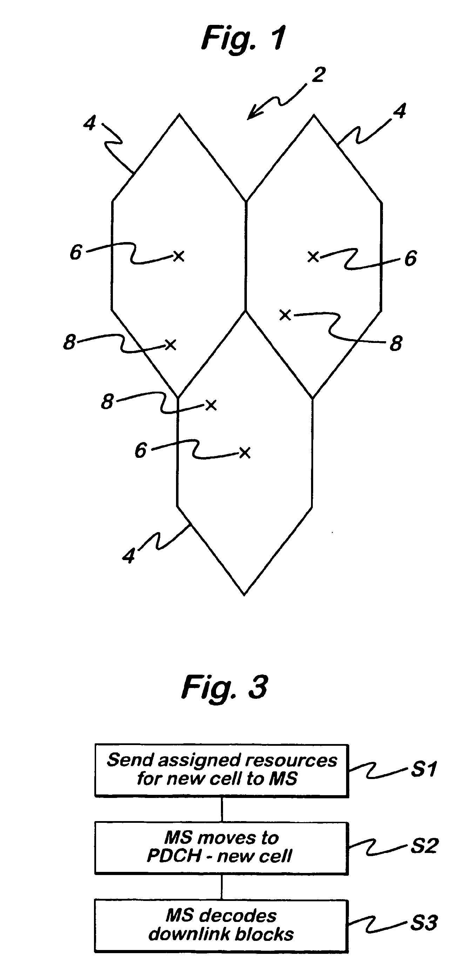

Wireless cellular telecommunication networks are known. In this regard, reference is made to Figure 1 which schematically shows a cellular communications network 2. The area covered by the network 2 is divided into cells 4. Each cell is provided with a base station 6. The base station 6 is arranged to communicate with mobile stations or other user equipment 8 located in the cells.

Various standards have been proposed for communication within the network. For example, one known standard is the GSM standard (global system for mobile communications). This is primarily designed for speech. The GPRS standard (general packet radio service) has been proposed for data. The GPRS standard has generally been proposed in the context of the GSM standard. The GSM standard allows circuit switched communication whilst the GPRS standard allows packet switched communication.

When a mobile station or user equipment moves, it can move from one cell into another. When that occurs, the user equipment or mobile station will generally stop communicating with the base station of its old cell and start communicating with the base station of the new cell. This is referred to as handoff or handover.

In the context of the GPRS standard, cell reselection procedures are specified. Cell reselection is where the mobile station or user equipment changes the cell (and the base station) with which it is associated. Currently, the standard specifies three cell reselection procedures. With the first two procedures NC0 and NC1, the mobile station makes the decision as to which cell the mobile station is to be associated. In the procedure NC2, the network makes the decision as to the cell with which the mobile station is to be associated. As will be appreciated, if the cells are overlapping or if the mobile station is located in border regions, different decisions can be made in different circumstances as to the cell with which the mobile station is to be associated.

The cell reselection procedures specified in the current GPRS standard are based on the assumption that the L2 link (- this is the TBF - temporary block flow link which is set up to carry the data blocks) is set up in the new cell after the cell has changed and after the mobile station has acquired the necessary system information to operate in the new cell. In other words, the mobile station changes the cell (and hence base station) with which it is associated and only then is the mobile station able to acquire the necessary information to allow it to operate. This has the disadvantage that this procedure is relatively slow. It can take some time for the mobile station to obtain the necessary system information messages and after that set up the TBF link. This causes a gap in transmission during a cell change which can last several seconds. This can cause a noticeable degradation in the quality of service. GPRS is often used for non-real time services. However, even in the context of the non-real time services, the gap of several seconds can still make an adverse impact on the quality.

In one modification to the standard, the concept of a network assisted cell change procedure was introduced. An example can be found in WO 00/79808. In this proposal, there was the aim of shortening the gap in transmission by sending the target cell (ie the new cell) system information via the old cell before terminating the link with that old cell and leaving the cell. The target cell information refers to System Information (SI) and Packet System Information (PSI) messages that the mobile must acquire before accessing the cell. These messages are usually broadcast on broadcast channels. Because the broadcast channel capacity is not very high these messages are broadcasted relatively seldom which causes long delay if the mobile station acquires this information by listening to the broadcast channel. The modification provides a mechanism where these messages can be sent during the ongoing TBF (Temporary Block Flow) via the source cell. In other words the mobile station does not have to listen to broadcast messages but gets this information during the ongoing TBF in the source cell. With this mechanism, the mobile station can set up the TBF link in the target cell without having any delay caused by the mobile station listening to information broadcast by the base station of the new cell in order to get the required system information messages. However, this proposed method still has the problem that there is a gap in transmission during a cell change as it takes some time to set up the TBF and resolve the contention resolution. This gap may still be long enough to provide a noticeable quality degradation in the provided levels of services.

### Summary of the Invention

It is an aim of embodiments of the present invention to address or at least mitigate the problem described previously.

According to a first aspect of the present invention there is provided a method of handing over user equipment from a source cell to a target cell in a cellular communications network, said method comprising the steps of sending to the user from the source Temporary Block Flow (TBF) link information for the target cell, while the user is associated with said source, said TBF link information defining at least one TBF in said target cell, and changing the cell with which the user equipment is associated from the source cell to the target cell, whereby the TBF link information allows said user to use said TBF in said target cell.

According to a second aspect of the present invention there is provided a cellular communications network comprising at least one user equipment, and a plurality of cells, said network comprising means for sending, when the user equipment is to be handed off from a source cell to a target cell, Temporary Block Flow (TBF) link information for the target cell from the source cell, while the user is associated with said source cell, said TBF link information defining at least one TBF in said target cell, and the user equipment being arranged in use to change the cell with which the user equipment is associated from the source cell to the target cell, whereby the TBF link information allows said user to use said TBF in said target cell.

For a better understanding of the present invention and as to how the same may be carried into effect, reference will now be made by way of example only to the accompanying drawings in which:
Figure 1 shows schematically a cellular communications network;
Figure 2 shows a network in which embodiments of the present invention can be used;
Figure 3 illustrates the broad concepts of embodiments of the invention; and
Figure 4 contrasts implementations of embodiments of the present invention with the previous proposals.

### Detailed Description of Embodiments of the Invention

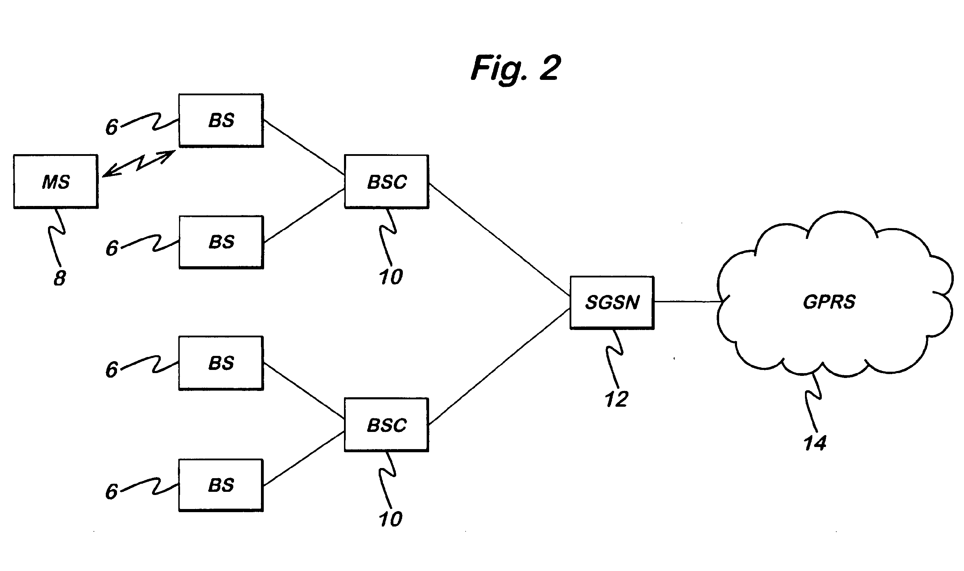

Reference will be made to Figure 2 which shows schematically the structure of a system in which embodiments of the present invention can be used. The mobile station 8 is arranged to communicate with respective base stations 6. In the schematic representation shown in Figure 2, four base stations are shown. However, it should be appreciated that this is for illustrative purposes only and in practice a larger number of base stations will be provided. Each base station 6 is associated with a cell. The cells may be adjacent, partially overlapping or completely overlapping. The base stations 6 are controlled by respective base station controllers 10. Each base station controller 10 will usually control a number of base stations. In the example shown in Figure 2, each base station controller is shown as controlling two base stations. In practice, each base station controller 10 will usually control more than two base stations. Each base station controller 10 is arranged to communicate with a signalling GPRS signalling node (SGSN) 12. A network generally has a number of these nodes. A GPRS transmission network 14 is provided which allows communication with other SGSN elements 12.

Packet control units may be provided in the network. The packet control unit can be provided in the base stations, the base station controller or the SGSN. In preferred embodiments of the present invention, the packet control unit is provided in the base station or the base station controller.

Embodiments of the present invention will be described in the context of a GPRS system. However, it should be appreciated that embodiments of the present invention can be applied to any other suitable system. Embodiments of the present invention are particularly applicable where the mobile station sends and/or receives packets of data. Thus, the air interface is packet switched. Where the air interface is packet switched, the remainder of the network can be circuit switched or packet switched. The GPRS system, in common with some other providers of packet services, is designed primarily for providing non-real time services. However, the GPRS system can be used with real time services in addition. For example, an internet call is an example of the real time service. An internet call is a telephone connection which is routed via the internet instead of via the more usual telephone networks. The internet call may be accompanied by a video portion. Other real time applications may be used with the GPRS system. As will be appreciated, embodiments of the present invention are particularly advantageous in real time applications. However, even in non-real time application, embodiments of the present invention can provide advantages.

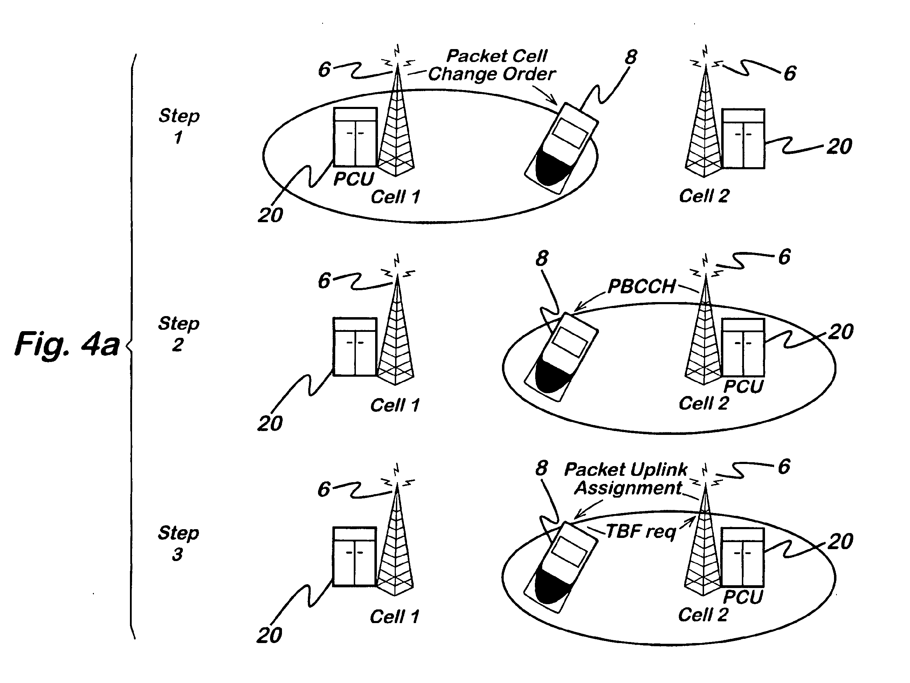

Reference will now be made to Figure 3 which shows a flow chart of the method embodying the present invention. This described method can be used in the context of the NC2 cell reselection mode. In other words, embodiments of the present invention can be used where cell reselection is controlled by the network. It should be appreciated that in alternative embodiments of the present invention, a new cell reselection mode can be specified. In alternative embodiments of the invention, the described method can be used in any other suitable mode. In step S1, the assignment of resources to the mobile station, when it is in its new cell, is_ sent to the mobile station whilst it is in its current or old cell. In other words, the mobile station is sent information defining the resources which it will use when it moves from its current cell to the target cell. In preferred embodiments of the present invention, the information is contained in the RLC/MAC (radio link control/medium access control protocol) assignment messages. These messages include the uplink and downlink packet assignment. This information can be included in any suitable message. For example, in preferred embodiments of the present invention, the information is included in the packet cell change order (PCCO) message as optional information. If this optional information is not included in that message, then the mobile station behaves in the way set out in the current version of the standard.

If, however, the message contains the additional information, the mobile station behaves as follows: It is assumed in the following that the system information is sent in the old cell using the packet neighbour cell data message. However, any other suitable message may be used in embodiments of the present invention.

In step S2, the mobile station moves to the PDCH (packet data channel) included in the PCCO message. In step S3, the mobile station starts decoding downlink blocks. It should be appreciated that the PCCO message may include information assigning the uplink TBF or the downlink TBF or both. In some embodiments at least one of the uplink and downlink connections has two or more TBFs in a given direction.

As far as the downlink operation is concerned, if the mobile station notices that a downlink TFI (temporary flow identity) has been assigned to it in the packet cell change order message, it decodes the blocks with this TFI on the assigned packet data channel (PDCH) in the new cell. The TFI identifies that the TBF has been assigned for the mobile station for data transfer purposes.

As far as the uplink operation is concerned, the mobile station is unable to send any data blocks in the new cell before it has received valid timing advance information from the network. The mobile station uses the timing advance information to adjust the time, within the duration of a timeslot, when it should send a data block Where the mobile station has been assigned an uplink TBF in the packet cell change order message which includes a USF (uplink state flag) for the new cell and the mobile station has noted this value in the new cell in a downlink block on the corresponding downlink PDCH and the mobile station does not yet have valid timing advance information, it will send four access bursts in each radio block indicated by the USF. The USF is used to reserve one or four uplink radio blocks in which the mobile station associated with the USF is allowed to transmit. The USF is received on a downlink PDCH and resources are reserved on the corresponding uplink PDCH. The USF tells which of the mobile stations camping on a PDCH is allowed to send on the corresponding uplink block. The mobile station will continue sending access bursts in all blocks indicated by this USF until it receives valid timing advance information from the network. Once this valid timing advance information has been received, the mobile station will continue communication in the uplink direction.

In the case that the mobile station has been assigned a downlink TBF and the mobile station notices the assigned TFI and a valid RRBP (relative reserved block period) field in a downlink block on the assigned downlink PDCH in the new cell and the mobile station does not have valid timing advance information, it will send four access bursts in the block indicated by the RRBP until it receives valid timing advance information. The RRBP value specifies a single uplink block in which a mobile station transmits either a packet control acknowledgement message or a PACCH (packet associated control channel) block to the network. After receiving Timing Advance information e.g. in the Packet DL Assignment message the mobile station will continue normal operation It is also possible to allocate the mobile station an uplink block for data or control message transfer or specifically for cell access purpose (i.e. for sending access bursts). In such case if the MS does not have valid timing advance it will send access bursts. As described above, after receiving timing advance information the mobile station will continue normal operation.

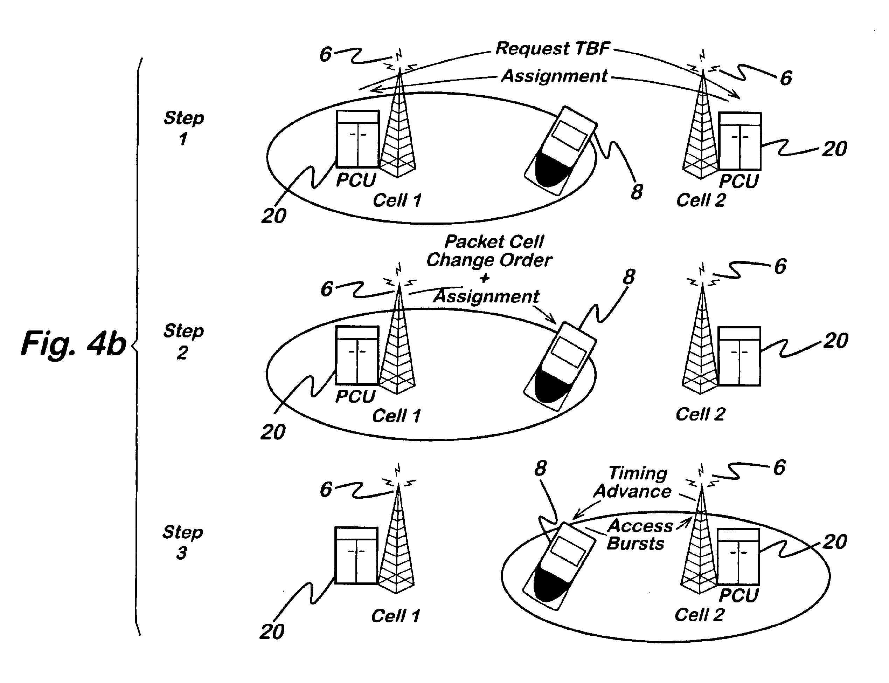

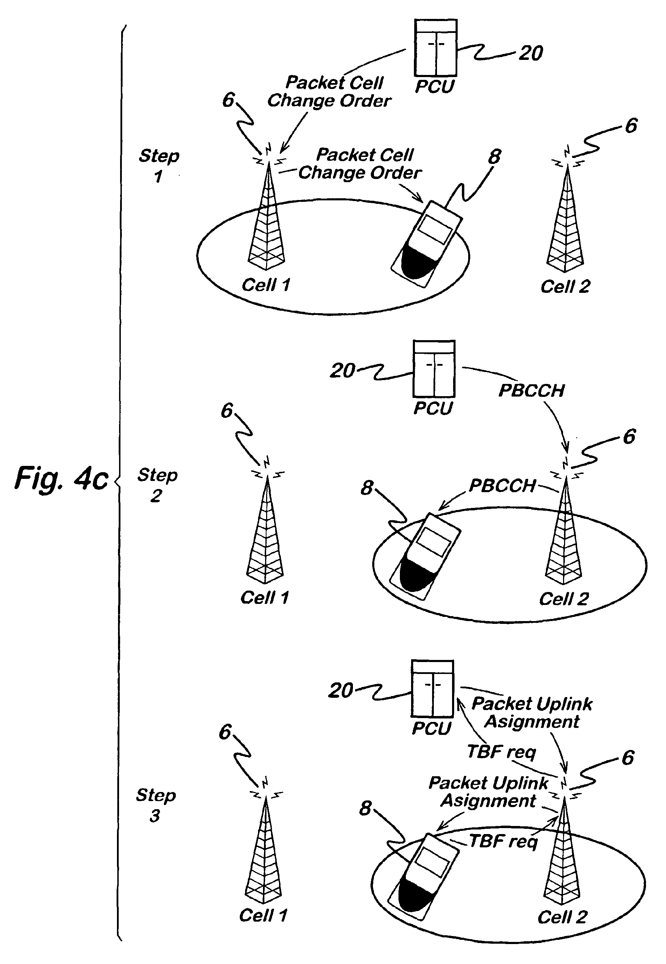

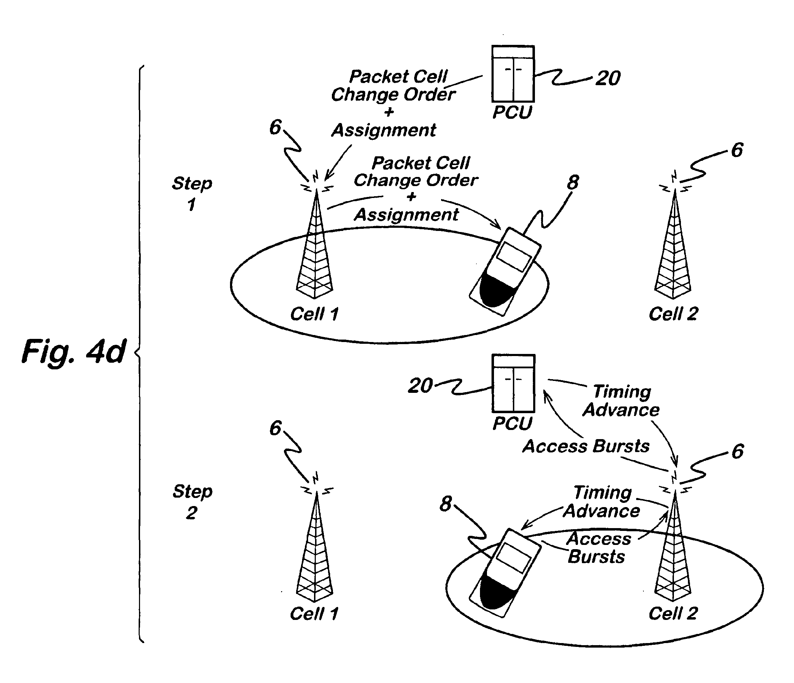

Reference is made to Figure 4 which illustrates how embodiments of the present invention can be implemented in contrast to the known arrangements. In particular, Figure 4A shows a first arrangement which does not incorporate embodiments of the present invention. Firstly, a packet control unit 20 of the network decides that the mobile station 8 should change from cell 1 to cell 2 (see step 1). The base station 6 of cell 1 sends the message to the mobile station 8. This is controlled by the packet control unit 20 which in the arrangement shown in Figure 4A is provided at the base station 6. However, as mentioned previously, the packet control unit can be provided elsewhere in the network. The mobile station 8 then starts communicating with the base station 6 of the new cell, cell 2 (see step 2). In particular, the mobile station 8 listens to the PBCCH (packet broadcast control channel) transmitted by the base station 6 of the cell 2. In known arrangements, the mobile station may not listen to the PBCCH but it can receive the system information messages via the source cell before terminating the TBF in the source cell and moving to the new cell. This is done with network assisted cell changes where the system information can be sent with the Packet Neighbour Cell Data message while still transferring data in the source cell. If this network assisted cell change feature is not supported, then the mobile station listens to the PBCCH as described above.

The information transmitted in the PBCCH channel is controlled by the packet control unit 20 associated with the base station 6 of the new cell (see step 3). Next, the mobile station 8 sends a TBF request to the base station 6 of the new cell. The base station 6 then sends packet uplink assignment information to mobile station 8. The mobile station is thus able to communicate with the base station. This is as currently proposed in the standard and will result in a break in the communications.

Reference is now made to Figure 4B which shows the scenario with embodiments of the present invention, this is assuming that the packet control units 20 are associated with the base stations 6. When it is determined by the packet control unit or any other network entity that the mobile station 8 is to move from cell 1 to cell 2, communication occurs between the packet control units 20 associated with each of the base stations (see step 1). In particular, the packet control unit 20 associated with the base station 6 of cell 1 sends a request to the packet control unit 20 associated with the base station 6 of the cell 2 requesting a TBF for the mobile station when it is in cell 2. The packet control unit 20 associated with the base station 6 of cell 2 sends information regarding the assigned TBF to the packet control unit 20 associated with the base station 6 of cell 1. The communication between the packet control units can be via the base station controllers and SGSN, or by any other suitable way. Information regarding the assigned TBF is then sent by the base station 6 of cell 1 to the mobile station (see step 2). In particular, the message, e.g. a PCCO packet cell change order containing the assignment information is sent to the mobile station. The mobile station will follow the instructions received in the PCCO message and at the given time (or immediately) it will leave the current PDCH and move to the assigned PDCH in the new cell according to received information. In the new cell the mobile station starts listening to downlink PDCH. In case the mobile station has been assigned the downlink TBF it can continue receiving data immediately after moving to the new cell. In the uplink direction no activity is possible before the mobile station has valid timing advance information. In case the mobile station has been assigned uplink TBF and it has valid timing advance information the mobile station may continue normal operation and send RLC/MAC data and/or control blocks in the uplink blocks indicated with USF or RRBP fields or using fixed allocation. In case the mobile station does not have valid timing advance information when it enters the new cell and begins listening to the assigned PDCH the mobile station must acquire valid timing advance information before it can operate normally i.e. send normal bursts. Timing advance information can be acquired by sending access bursts on allocated uplink blocks. The allocation can be given in the PCCO message before changing the cell (e.g. the block period or the TDMA frame number when bursts can be sent is indicated in the message). Alternatively the mobile station moves to the new cell and listens to the downlink PDCH and when it notices its USF or TFI and valid RRBP it sends the access bursts in the block indicated by the USF or RRBP fields. In step 3, timing advance information is then obtained from the base station 6 of the second cell e.g. in the Packet UL/DL Assignment or some other message and thereafter communication can continue as normal.

During the cell change it may happen that either the network does not receive access bursts or the mobile station does not receive the message from the network containing valid timing advance information. In such case the mobile station will continue sending access bursts whenever allocated an uplink resource by USF or RRBP field. In case the network receives access bursts in the allocated uplink block after sending the MS valid timing advance information the network sends the timing advance information again.

Reference is now made to Figure 4C which shows the prior art situation where the packet control unit is remote from the base station. The packet control unit 20 may be associated with the base station controller, SGSN or indeed any other network entity or may be a separate entity in its own right. When the network determines that the mobile station should change from cell 1 to cell 2, the packet control unit 20 sends a packet cell change order to the base station 6 associated with cell 1 (see step 1). The base station 6 in turn sends the packet cell change order to the mobile station 8. Next, in step 2, the mobile station 8 monitors the PBCCH channel transmitted by the base station 6 of cell 2. In the known arrangement the mobile station may not have to listen to the PBCCH but it can receive the system information messages via source cell before terminating the TBF in the source cell and moving to the new cell. This is as discussed in relation to Figure 4A. The base station 6 of cell 2 receives PDCH channel information from the packet control unit 20. In step 3, the mobile station 8 sends a request for the TBF to the base station 6 of cell 2. That request is forwarded by the base station to the packet control unit 20. The packet control unit 20 sends information defining the packet uplink assignment to the base station 6 associated with cell 2. That base station 6 forwards the packet uplink assignment information to the mobile station 8. Again, as with the arrangement shown in Figure 4A, there is a delay before the connection is properly established with the new base station.

Reference is made to Figure 4D which shows how an embodiment of the present invention is implemented where the packet control unit 20 is separate from the base stations. In step 1, the packet control unit 20 sends a packet cell change order along with assignment information to the base station 6 of cell 1. That base station 6 forwards that information to the mobile station 8. Assuming that the MS does not have valid timing advance information in step 2, the mobile station 8 then sends access bursts to the base station 6 associated with cell 2 in allocated block period. As with the embodiment shown in Figure 4B the allocated block period can be indicated in the PCCO assignment information part or it can be indicated using the USF or RRBP fields of downlink RLC/MAC blocks on the assigned PDCH. Access bursts are forwarded to the packet control unit 20 which provides timing advance information to the base station 6 of cell 2.. That timing advance information is then sent back to the base station 6 so that the mobile station and base station of cell 2 can commence communicating as normal.

It should be appreciated that the packet control unit can be provided in any suitable location in the network.

It should be appreciated that in the arrangement shown in Figure 4D, the same packet control unit may be controlling both the base station of cell 1 and the base station of cell 2. However, in some situations, different packet control units may be controlling the two base stations. Where this occurs, and in the context of the arrangement shown in Figure 4B where the source packet control unit is different to the target packet control unit, the source packet control unit needs to obtain from the target packet control unit the required TBF parameters.

If the target cell is under the coverage of the same packet control unit as the source unit, the radio link control can be suspended (and not reset) whilst the cell change occurs. After the cell change occurs, this can be resumed. In other words, there is no need for relocating the radio link control buffers. If on the other hand, different packet control units are required, RLC buffer relocation would enhance the performance. However, this is not required. The mobile station may be moved to another cell when there is still unsent data in the network side RLC buffer (eg when the signal strength decreases rapidly). If the new cell is under a different packet control unit the unsent data may be moved (via the fixed network) to the packet control unit of the target cell. This is called the relocation of the RLC buffer.

Reference will now be made to the dual transfer mode DTM in which the mobile station has a circuit switched connection and a GPRS connection at the same time. Embodiments of this invention can be used with other arrangements where there is a shared channel and a dedicated channel at the same time. This is regardless of whether the channels are both circuit switched, both packet switched or one of each.

The DTM case is analogous to the arrangements described previously except that the TBF assignment information is included in the handover command. In this way, both the dedicated and shared channel connection can be moved simultaneously without dropping the TBF as is done currently. In the case that the TBF assignment information is not included in the handover command, the TBF is terminated and the data transfer is resumed by setting up a TBF using DTM procedures.
The packet cell change order message has the following format. The required additional information described above may be incorporated in this field.

### PAGE_MODE (2 bit field)

### Global TFI

This information element contains the TFI of the mobile station's downlink TBF or uplink TBF.

### TLLI (32 bit field)

This is the temporary logical link identity. It is the temporary logical identity identifying the logical link connection.

### IMMEDIATE_REL (bit)

This field indicates whether the mobile shall immediately abort any operation in the old cell and move to the target cell or if it should not immediately abort operation in the old cell and follow a cell reselection procedure, such as that embodying the invention. This field is coded according to the following table:

| | |
|---|---|
| 0 | No immediate abort of operation in the old cell is required. |
| 1 | Immediate abort of operation in the old cell is required. |

### ARFCN (10 bit field) Absolute Radio Frequency Channel Number

This field contains the BCCH frequency of the new cell. This field is encoded as the ARFCN defined in 3GPP TS 44.018. This identifies the allocated channel. Range 0 to 1023

### BSIC (6 bit field) (Base station identity code)

This field contains the BSIC of the new cell. This field is encoded as the BSIC value defined in 3GPP TS 44.018.
Range 0 to 63

### CCN_ACTIVE (1 bit field) Cell Change Notification

This field indicates whether CCN is enabled for the mobile station in the cell addressed by ARFCN and BSIC. It is coded as follows:

| | |
|---|---|
| 0 | The broadcast CCN_ACTIVE parameter shall apply if available. |

Otherwise, CCN is disabled for the mobile station.

| | |
|---|---|
| 1 | CCN is enabled for the mobile station. |

### CONTAINER_ID (2 bit field)

This optional parameter is included only if the network has earlier sent neighbour cell system information for the cell addressed by the ARFCN and the BSIC.
The **NC (network control)_Measurement_Parameters struct** contains the NETWORK_CONTROL_ORDER and the optional parameters
NC_NON_DRX_PERIOD, NC_REPORTNG_PERIOD_I.
NC_REPORTING_PERIOD_T and the NC_FREQUENCY LIST. These parameters shall apply in the target cell.

### NETWORK_CONTROL_ORDER (2 bit field)

The NETWORK_CONTROL_ORDER field is coded according to the following table :

| bit | |
|---|---|
| 2 1 | |
| 0 0 | NC0 |
| 0 1 | NC1 |
| 1 0 | NC2 |
| 1 1 | RESET |

**NC_NON_DRX_PERIOD** (3 bit field).
**NC_REPORT)NG_PERIOD_I** (3 bit field)
**NC_REPORTING_PERIOD_T** (3 bit field)
**NC_FREQUENCY_LIST**

### 3G Target Cell struct

### Bandwidth_FDD (3bit field) (Frequency division duplex)

### FDD_ARFCN (14 bit field)

This information element is defined as the UARFCN in 3G TS 25.101. Any non-supported frequency shall not be considered as an error; indices of the 3G Neighbour Cell list shall be incremented accordingly.

### Scrambling Code (9 bit field)

This parameter indicates the Primary Scrambling Code as defined in 3GPP TS 25.213.

### Diversity (1 bit field)

This parameter indicates if diversity is applied for the cell:

| Bit | |
|---|---|
| 0 | Diversity is not applied for this cell |
| 1 | Diversity is applied for this cell. |

### Bandwidth_TDD (3 bit field) (Time division duplex)

This optional information element refers to 3G TS 25.331.

| Bit | |
|---|---|
| 321 | |
| 000 | 3.84Mcps |
| 001 | 1.28Mcps |

All other values shall not be interpreted as an error; indices of the 3G Neighbour Cell list shall be incremented accordingly (but no reporting can be performed). When missing, this indicates 3.84 Mcps.

### TDD_ARFCN (14 bit field)

This optional information element is defined as the UARFCN in 3G TS 25.102. Any non supported frequency shall not be considered as an error; indices of the 3G Neighbour Cell list shall be incremented accordingly.

### Cell Parameter (7 bit field)

This parameter is defined in 3GPP TS 25.223.

### Sync Case (1 bit field)

This parameter is defined in 3GPP TS 25.223

| Bit | |
|---|---|
| 0 | Sync Case 1 |
| 1 | Sync Case 2 |

**CCN Support Description**

### CCN_SUPPORTED (1 bit field)

This parameter is used for determining whether the mobile station shall enter CCN mode when re-selecting a cell and CCN is enabled :

| Bit | |
|---|---|
| 0 | CCN is enabled towards the corresponding cell |
| 1 | CCN is disabled towards the corresponding cell |

The packet downlink assignment information packet contains the following information and in preferred embodiments of the invention is modified as discussed hereinbefore.

### PAGE_MODE (2 bit field)

### PERSISTENCE_LEVEL (4 bit field for each Radio Priority 1...4)

### Referenced address struct

This information element contains the address of the mobile station addressed by the message.

### Global TFI

This information element contains the TFI of the mobile station's downlink TBF or uplink TBF.

### TLLI (32 bit field)

### MAC_MODE (2 bit field)

This information field indicates the medium access method to be used during the TBF.

| bit | |
|---|---|
| 2 1 | |
| 0 0 | Dynamic Allocation |
| 0 1 | Extended Dynamic Allocation |
| 1 0 | Fixed Allocation, not half duplex mode |
| 1 1 | Fixed Allocation, half duplex mode |

### RLC_MODE (1 bit field)

This field indicates the RLC mode of the requested TBF.

| | |
|---|---|
| 0 | RLC acknowledged mode |
| 1 | RLC unacknowledged mode |

### CONTROL_ACK (1 bit field)

This field shall be set to '1' if the network establishes a new downlink TBF for the mobile station whose timer T3192 is running. Otherwise this field shall be set to '0'.

### TIMESLOT_ALLOCATION (8 bit field)

### Packet Timing Advance

### P0 (4 bit field)

See the Packet Uplink Assignment message.

### BTS_PWR_CTRL_MODE (1 bit field)

See the Packet Uplink Assignment message.

### PR_MODE (1 bit field)

See the Packet Uplink Assignment message.

### Power Control Parameters

### Frequency Parameters

### DOWNLINK_TFI_ASSIGNMENT (5 bit field)

This information element, if present, assigns the TFI to the mobile station to identify to downlink TBF described by this message.

### TBF Starting Time

The TBF Starting Time field contains a starting time that indicates the TDMA frame number during which the assigned TBF may start. If no downlink TBF is in progress, the mobile station need not monitor the TFI field of downlink RLC data blocks until the indicated TDMA frame number. After the indicated TDMA frame number, the mobile station shall operate as during a downlink TBF. If a downlink TBF is already in progress, the mobile station shall continue to use the parameters of the existing TBF until the TDMA frame number occurs. When the indicated TDMA frame number occurs, the mobile station shall immediately begin to use the new parameters assigned.

### Measurement Starting Time

The Measurement Starting Time field contains a starting time that indicates the frame number during which the first assigned measurement period shall occur. The mobile station must make one or more neighbour cell power measurements during the assigned frame number and during the following 3 TDMA frames.

### MEASUREMENT_BITMAP (8 bit field)

This information field indicates the timeslots assigned for use during measurement periods. The field as a bitmap where each bit corresponds with a timeslot number. Bit 1 corresponds to TS0; Bit 2 to TS1...

| | |
|---|---|
| 0 | the MS shall receive downlink data during this timeslot |
| 1 | the MS shall make measurements during the timeslot |

### MEASUREMENT_INTERVAL (5 bit field)

The Measurement Interval field indicates the number of block periods from the start of one assigned measurement period to the beginning of the next measurement period.

| bit | |
|---|---|
| 5 4 3 2 1 | |
| 0 0 0 0 0 | make measurements during every block period |
| 0 0 0 0 1 | make measurements during every other block period |
| 0 0 0 1 0 | make measurements during every 3^{rd} block period |
| ... | |
| -1 1 1 1 1 | make measurements during every 32^{nd} block period |

**EGPRS Window Size (Enhanced GPRS)**

### LINK_QUALITY_MEASUREMENT_MODE (2 bit field)

This field determines the measurements to be included within the EGPRS Timeslot Link Quality Measurements IE.

| bit | |
|---|---|
| 2 1 | |
| 0 0 | The MS shall not report either interference measurements or per slot BEP measurements. |
| 0 1 | The MS shall report available interference measurements for timeslots 0 through 7. The □ value is defined in 3GPP TS 45.008. No per slot mean BEP measurements shall be reported. |
| 1 0 | The MS shall report mean BEP on each allocated time slot. The MS shall report the mean BEP measurement corresponding to the modulation for which it has received a larger number of blocks since the previous report. The MS shall make BEP measurements only on |
| | Radio Blocks intended for it. No interference measurements (□ values) shall be reported. |
| 1 1 | The MS shall report mean BEP on each allocated time slot. The MS shall report the mean BEP measurement corresponding to the modulation for which it has received a larger number of blocks since the previous report. The MS shall make BEP measurements only on Radio Blocks intended for it. In addition to mean BEP, the MS shall report interference measurements for no more than four time slots. The MS shall first report available interference measurements for time slots 0, 1, 2, and 3; the MS shall next report available interference measurements for time slots 4, 5, 6, and 7; and the MS shall alternate between these two groups for subsequent reports. If any of the interference measurements are unavailable for reporting for reasons specified in 3GPP TS 45.008, the MS shall substitute least-recently-reported and available interference measurements for time slots not already included in the report. |

All other values are reserved.

### Packet Extended Timing Advance (2 bit field)

### COMPACT reduced MA

All other values are reserved.

Packet Extended Timing Advance
Compact reduced MA

### BEP_PERIOD2 (4 bit field)

This field contains a constant which is used for filtering channel quality measurements in EGPRS. BEP_PERIOD2 when present, or if not, when received in a previous message of the same TBF session, shall be used instead of BEP_PERIOD. For details see 3GPP TS 45.008.
Range: 0 to 15

The packet uplink assignment information element details are as follows

### PAGE_MODE (2 bit field)

### PERSISTENCE_LEVEL (4 bit field for each Radio Priority 1...4)

### Referenced Address struct

This information element contains the address of the mobile station addressed by the message.

### Global TFI

This information element identifies the uplink TFI, if available, or the downlink TFI, to which this message applies.
TQI (16 bit field)

### Packet Request Reference

### TIMESLOT_ALLOCATION (8 bit field)

If this field is not present, the timeslot allocation is indicated by the Power Control Parameters IE.

### CHANNEL_CODING_COMMAND (2 bit field)

The Channel Coding Indicator field indicates the channel coding scheme that the mobile station shall use when transmitting data on the uplink.

| bit | |
|---|---|
| 2 1 | |
| 0 0 | CS-1 |
| 0 1 | CS-2 |
| 1 0 | CS-3 |
| 1 1 | CS-4 |

### CONTENTION_RESOLUTION_TLLI (32 bit field)

The CONTENTION_RESOLUTION_TLLI field is present only if the network has decoded one of the uplink blocks containing the TLLI during the EGPRS one phase access. The mobile station shall perform the contention resolution function if this field is present. This field contains a TLLI.

### COMPACT reduced MA

### EGPRS Modulation and Coding Scheme

### Resegment

### EGPRS Window Size

### TLLI_BLOCK_CHANNEL_CODING (1 bit field)

This field indicates the channel coding command that the mobile station shall use for any RLC data block containing a TLLI field in the RLC data block header. This field is coded as shown:

| | |
|---|---|
| 0 | the MS shall use CS-1 in GPRS TBF mode or MCS-1 in EGPRS TBF-mode for any RLC data block containing a TLLI in the RLC data block header |
| 1 | the MS shall use the value commanded in the |

CHANNEL_CODING_COMMAND for any RLC data block containing a TLLI in the RLC data block header

### BEP_PERIOD2 (4 bit field)

This field contains a constant which is used for filtering channel quality measurements in EGPRS. BEP_PERIOD2 when present, or if not, when received in a previous message of the same TBF session, shall be used instead of BEP_PERIOD. For details see 3GPP TS 45.008.
Range: 0 to 15

### UPLINK_TFI_ASSIGNMENT (5 bit field)

This information element, if present, assigns the contained TFI to the mobile station to identify to uplink TBF described by this message.

### Packet Timing Advance

### Frequency Parameters

This information element, if present, assigns frequency parameters to the uplink TBF. If this information element is not present the mobile station shall use its previously assigned frequency parameters. 8.

### Dynamic Allocation struct

This information element contains parameters necessary to define the radio resources of a dynamic allocation or an extended dynamic allocation. **EXTENDED_DYNAMIC_ALLOCATION** (1 bit field)
This information field indicates the medium access mode to be used during the TBF.

| | |
|---|---|
| 0 | Dynamic Allocation |
| 1 | Extended Dynamic Allocation |

### Power Control Parameters

This information element, if present, contains power control parameters and the timeslot allocation for the mobile station. If this information element is not present, the MS shall continue to use the previous parameters. **RLC_DATA_BLOCKS_GRANTED** (8 bit field)
The RLC/MAC blocks Granted field assigns a fixed number of RLC data blocks that the mobile station shall transmit during the uplink TBF. If the RLC_DATA_BLOCKS_GRANTED field is present the mobile station shall transmit only the assigned number of RLC data blocks. Otherwise the duration of the uplink TBF is undefined. Retransmissions of negatively acknowledged RLC data blocks do not apply toward the maximum number. This field is encoded as a binary number as shown:

| bit | |
|---|---|
| 8 7 6 5 4 3 2 1 | |
| 0 0 0 0 0 0 0 0 | 9RLCdatablocks |
| 0 0 0 0 0 0 0 1 | 10 RLC data blocks |
| . . . | |
| 1 1 1 1 1 1 1 1 | 264 RLC data blocks |

### TBF Starting Time

The TBF Starting Time field contains a starting time that indicates the frame number during which the assigned TBF may start.
In case of dynamic allocation, if no uplink TBF is in progress, the MS need not monitor the USF field until the TDMA frame number occurs. When the indicated TDMA frame number occurs, the mobile station shall immediately begin to monitor the USF field and use the new assigned uplink TBF parameters when its USF has occurred. If an uplink TBF is already in progress, the MS shall continue to use the parameters of the existing TBF until the TDMA frame number occurs. When the indicated TDMA frame number occurs, the mobile station shall immediately begin to monitor the USF field and use the new assigned uplink TBF parameters when its USF has occurred.
In case of single block allocation, the mobile station shall use the assigned timeslot during the RLC/MAC block whose first TDMA burst occurs in the indicated TDMA frame number.
In case of fixed allocation, if no uplink TBF is in progress, the MS shall wait until the TDMA frame number occurs, and then, shall use the assigned uplink resources from the indicated TDMA frame number forward, according to the parameters in the fixed allocation struct. If an uplink TBF is in progress, the MS shall continue to use the parameters of the existing TBF until the TDMA frame number occurs. When the TDMA frame number occurs, the MS shall then use the assigned uplink resources from the indicated TDMA frame number forward, according to the parameters in the fixed allocation struct.
This information element is encoded as the Starting Frame Number Description IE.
**USF for Timeslot Number 0 (TN0)** (3 bit field)
**USF for Timeslot Number 1 (TN1)** (3 bit field)
**USF for Timeslot Number 2 (TN2)** (3 bit field)
**USF for Timeslot Number 3 (TN3)** (3 bit field)
**USF for Timeslot Number 4 (TN4)** (3 bit field)
**USF for Timeslot Number 5 (TN5)** (3 bit field)
**USF for Timeslot Number 6 (TN6)** (3 bit field)
**USF for Timeslot Number 7 (TN7)** (3 bit field)
These fields indicate the USF value assigned to the MS for allocated timeslots (range 0 to 7). These fields are encoded as a binary presentation of the USF value.

### USF_GRANULARITY (1 bit field)

This information field indicates the USF granularity to be applied by the mobile station when it is assigned a TBF using Dynamic Allocation.

| | |
|---|---|
| 0 | the mobile station shall transmit one RLC/MAC block |
| 1 | the mobile station shall transmit four consecutive RLC/MAC blocks |

### Single Block Allocation struct

This information element contains parameters necessary to define the radio resources of a Single Block allocation. For example for sending of a PACKET RESOURCE REQUEST message in a two phase access or a Measurement report.

### TIMESLOT_NUMBER (3 bit field)

This field indicates the timeslot assigned for transfer of a single RLC/MAC block on the uplink. This field is coded as the binary representation of the timeslot number as defined in 3GPP TS 45.010.
Range 0 to 7

### ALPHA (4 bit field)

For encoding and description see the Global Power Control Parameters IE.

### GAMMA_TN (5 bit field)

The GAMMA_TN field is the binary representation of the parameter rCH for MS output power control in units of 2 dB, see 3GPP TS 45.008. The GAMMA_TN field is coded according to the following table:

| bit | |
|---|---|
| 5 4 3 2 1 | |
| 0 0 0 0 0 | rCH=0 dB |
| 0 0 0 0 1 | rCH=2dB |
| . . . . | |
| . . . . | |
| 1 1 1 1 0 | rCH = 60 dB |
| 1 1 1 1 1 | rCH=62dB |

### P0 (4 bit field)

This field is an optional downlink power control parameter. If P0 is present, then downlink power control is used; otherwise, if P0 is not present, then downlink power control is not used. Its meaning is specific to downlink power control - modes A and B used by the network, as per 3GPP TS 45.008. It is encoded as follows:

| bit | |
|---|---|
| 4 3 2 1 | |
| 0 0 0 0 | P0= 0 dB |
| 0 0 0 1 | P0= 2 dB |
| 0 0 1 0 | P0=4 dB |
| . | |
| . | |
| 1 1 1 1 | P0 = 30 dB |

### BTS_PWR_CTRL_MODE (1 bit field)

This field indicates the downlink power control mode used by the network, as defined in 3GPP TS 45.008. It is encoded as follows:

| | |
|---|---|
| 0 | Mode A |
| 1 | Mode B |

### PR_MODE (1 bit field)

This field indicates, as defined in 3GPP TS 45.008. It is encoded as follows:

| | |
|---|---|
| 0 | PR mode A : for one addressed MS |
| 1 | PR mode B : for all MS |

### Fixed Allocation struct

This information element contains parameters necessary to define the radio resources of a fixed allocation.

### FINAL_ALLOCATION (1 bit field)

This field indicates whether this allocation is the last allocation of the TBF.

| | |
|---|---|
| 0 | this allocation is not the last allocation of the TBF |
| 1 | this allocation is the last allocation of the TBF |

### HALF_DUPLEX_MODE (1 bit field)

This information field indicates, for multislot class 19 to 29, whether the mobile station shall operate in half duplex mode. Other mobile stations shall consider this field as 0.

| | |
|---|---|
| 0 | the MS shall not operate in half duplex mode |
| 1 | the MS shall operate in half duplex mode |

### BLOCKS_OR_BLOCK_PERIODS (1 bit field)

This indicates if the ALLOCATION_BITMAP is to be interpreted as blocks or block periods.

| | |
|---|---|
| 0 | the ALLOCATION_BITMAP is to be interpreted as blocks |
| 1 | the ALLOCATION_BITMAP is to be interpreted as block periods |

### DOWNLINK_CONTROL_TIMESLOT (3 bit field)

This information field indicates the downlink timeslot that mobile station operating in fixed allocation mode shall monitor for downlink PACCH. This field is coded as the binary representation of the timeslot number as defined in 3GPP TS 45.010.
Range 0 to 7

### ALLOCATION_BITMAP_LENGTH (7 bit field)

This specifies the number of bits in the ALLOCATION_BITMAP.
Range 0 to 127

### ALLOCATION_BITMAP (variable length field)

If The ALLOCATION_BITMAP field is variable length. If the ALLOCATION_BITMAP_LENGTH field is not present, the ALLOCATION_BITMAP fills the remainder of the message. If the BLOCKS_OR_BLOCK_PERIODS field is not present, then the ALLOCATION_BITMAP should be interpreted as blocks. This field is defined in subclause 12.4.
**Packet Extended Timing Advance** (2 bit field)

### Multi Block Allocation struct

This information element contains parameters necessary to define the radio resources of a Multi Block allocation.

**NUMBER OF RADIO BLOCKS ALLOCATED(2 bit field)**

| Bits | |
|---|---|
| 1 0 | |
| 0 0 | 1 radio block reserved for uplink transmission |
| 0 1 | 2 radio blocks reserved for uplink transmission |
| 1 0 | reserved for future use |
| 1 1 | reserved for future use |

### ACCESS TECHNOLOGY TYPE

This field indicates the access technology that is requested from the mobile station. The field is coded according to the definition in 3GPP TS 44.018. The access technology types requested from the MS in the Access Technologies Request structure shall be classified by priority, the most important first. The MS shall reply using the same order.

**ARAC RETRANSMISSION REQUEST (1 bit field)**

| | |
|---|---|
| 0 | indicates that retransmission of an ADDITIONAL MS RADIO ACCESS CAPABILITIES message is not requested |
| 1 | indicates that retransmission of an ADDITIONAL MS RADIO ACCESS CAPABILITIES message is requested |

It should be appreciated that whilst embodiments of the present invention have been described in the context of a GPRS system, embodiments of the present invention can be implemented with modifications to the GPRS system such as EGPRS or GPRS/GERAN. Embodiments of the present invention can also be implemented with any other circuit or packet switched systems. Embodiments of the present invention are, however, particularly applicable to data packet Embodiments of the present invention are not just applicable to wireless systems but may also be used with wired systems or the like. The messages described hereinbefore are by way of example and the information required can be provided in any suitable message or be provided in a dedicated message. The messages described are GPRS messages. It should be appreciated that in alternative embodiments of the invention, different standards may apply. The content of the packets may differ as may the format of the information. Different standards may use different names for the same type of information.

## Claims

1. A method of handing over user equipment (8) from a source cell to a target cell in a cellular communications network, said method comprising the steps of:
sending to the user from the source Temporary Block Flow hereafter referred to as TBF link information for the target cell, while the user is associated with said source, said TBF link information defining at least one TBF in said target cell; and
changing the cell with which the user equipment is associated from the source cell to the target cell, whereby the TBF link information allows said user to use said TBF in said target cell.

2. A method as claimed in claim 1, wherein said link information is provided for at least one of an uplink and a downlink TBF.

3. A method as claimed in claim 1 or 2, wherein when said user equipment changes from the source cell to the target cell, the TBF of the source cell is released and the TBF of the target cell is set up.

4. A method as claimed in any preceding claim, wherein said link information comprises information identifying at least one time period during which said user equipment is permitted to transmit in said target cell.

5. A method as claimed in claim 4, wherein said transmission on said time period consists of sending access bursts to acquire valid timing advance information

6. A method as claimed in claim 4 or 5, wherein said at least one time period is reserved in a packet data channel.

7. A method as claimed in claim 4, 5 or 6, wherein said information identifying at least one time period comprises at least one of the following: RRBP (relative reserved block period), USF (user state flag), fixed allocation.

8. A method as claimed in any preceding claim, wherein said user equipment is arranged to receive timing advance information from said target cell.

9. A method as claimed in any preceding claim, wherein said TBF information is contained in radio link control and/or medium access control protocol assignment messaging.

10. A method as claimed in claimed in any preceding claim, wherein said TBF information is contained in a assignment message.

11. A method as claimed in any preceding claim, wherein said link information is contained in a Packet Cell Change Order message.

12. A method as claimed in any preceding claim, comprising the step of the user equipment communicating with the source cell via at least two channels and said link information allows at least one channel to be set up in said target cell.

13. A method as claimed in claim 12, wherein at least one of said channels is a shared channel.

14. A method as claimed in claim 12 or 13, wherein at least one of said channels is a dedicated channel.

15. A method as claimed in any preceding claim, wherein the target cell and source cell are controlled by a common control unit.

16. A method as claimed in any preceding claim, wherein TBF information for the source cell is reconfigured to provide the TBF information for the target cell.

17. A method as claimed in any of claims to 1 to 14, wherein said target cell and source cell are controlled by different control units.

18. A method as claimed in any preceding claim, comprising sending to and/or receiving at the user equipment packets.

19. A method as claimed in claim 18 when appended to claim 15 or 17, wherein the or each control unit comprises a packet control unit.

20. A method as claimed in any preceding claim, wherein said network is arranged to operate in accordance with the GPRS standard.

21. A method as claimed in any preceding claim, wherein said user equipment comprises a mobile station.

22. A cellular communications network comprising at least one user equipment (8) and a plurality of cells, said network comprising:
means for sending, when the user equipment is to be handed off from a source cell to a target cell, Temporary Block Flow hereafter refered as TBF link information for the target cell from the source cell, while the user is associated with said source cell, said TBF link information defining at least one TBF in said target cell; and
the user equipment being arranged in use to change the cell with which the user equipment is associated from the source cell to the target cell, whereby the TBF link information allows said user to use said TBF in said target cell.

## Patentansprüche

1. Verfahren zum Durchführen einer Übergabe einer Benutzerausrüstung (8) von einer Ursprungszelle an eine Zielzelle in einem zellularen Kommunikationsnetz, wobei das Verfahren die Schritte umfasst:
Senden von Verbindungsinformationen betreffend Temporary Block Flow, hiernach als TBF bezeichnet, für die Zielzelle von dem Ursprung an den Benutzer, während der Benutzer mit dem Ursprung verknüpft ist, wobei die TBF-Verbindungsinformationen mindestens einen TBF in der Zielzelle definieren; und
Ändern der Zelle, mit der die Benutzerausrüstung verknüpft ist, von der Ursprungszelle auf die Zielzelle, wobei die TBF-Verbindungsinformationen es dem Benutzer gestatten, den TBF in der Zielzelle zu nutzen.

2. Verfahren nach Anspruch 1, wobei die Verbindungsinformationen für mindestens einen Uplink- und/oder einen Downlink-TBF bereitgestellt werden.

3. Verfahren nach Anspruch 1 oder 2, wobei der TBF der Ursprungszelle freigegeben wird und der TBF der Zielzelle aufgebaut wird, wenn die Benutzerausrüstung von der Ursprungszelle auf die Zielzelle wechselt.

4. Verfahren nach irgendeinem der vorhergehenden Ansprüche, wobei die Verbindungsinformationen Informationen umfassen, die mindestens einen Zeitraum kennzeichnen, während dem es der Benutzerausstattung gestattet ist, in der Zielzelle zu senden.

5. Verfahren nach Anspruch 4, wobei die Übertragung in dem Zeitraum daraus besteht, Zugangs-Signalfolgen zu senden, um gültige Timing Advance-Informationen zu erlangen.

6. Verfahren nach Anspruch 4 oder 5, wobei der mindestens eine Zeitraum in einem Paketdatenkanal reserviert ist.

7. Verfahren nach Anspruch 4, 5 oder 6, wobei die Informationen, die mindestens einen Zeitraum kennzeichnen, mindestens eines der folgenden umfassen: RRBP (relative reserved block period), USF (user state flag), feste Zuweisung.

8. Verfahren nach irgendeinem der vorhergehenden Ansprüche, wobei die Benutzerausrüstung eingerichtet ist, Timing Advance-Informationen von der Zielzelle zu empfangen.

9. Verfahren nach irgendeinem der vorherigen Ansprüche, wobei die TBF-Informationen in Funkverbindungssteuerung- und/oder Mediumszugangssteuerung-Protokollzuweisungs-Nachrichten enthalten sind.

10. Verfahren nach irgendeinem der vorhergehenden Ansprüche, wobei die TBF-Informationen in einer Zuweisungsnachricht enthalten sind.

11. Verfahren nach irgendeinem der vorhergehenden Ansprüche, wobei die Verbindungsinformationen in einer Paket-Zellenänderungs-Anweisungs-Nachricht enthalten sind.

12. Verfahren nach irgendeinem der vorhergehenden Ansprüche, umfassend den Schritt, dass die Benutzerausrüstung mit der Ursprungszelle über mindestens zwei Kanäle kommuniziert und die Verbindungsinformationen es gestatten, dass mindestens ein Kanal in der Zielzelle aufgebaut wird.

13. Verfahren nach Anspruch 12, wobei mindestens einer der Kanäle ein gemeinsam benutzter Kanal ist.

14. Verfahren nach Anspruch 12 oder 13, wobei mindestens einer der Kanäle ein fest zugeordneter Kanal ist.

15. Verfahren nach irgendeinem der vorhergehenden Ansprüche, wobei die Zielzelle und die Ursprungszelle von einer gemeinsamen Steuereinheit gesteuert werden.

16. Verfahren nach irgendeinem der vorhergehenden Ansprüche, wobei TBF-Informationen für die Ursprungszelle rekonfiguriert werden, um die TBF-Informationen für die Zielzelle bereitzustellen.

17. Verfahren nach irgendeinem der Ansprüche 1 bis 14, wobei die Zielzelle und die Ursprungszelle von unterschiedlichen Steuereinheiten gesteuert werden.

18. Verfahren nach irgendeinem der vorhergehenden Ansprüche, umfassend Senden und/oder Empfangen von Paketen an die bzw. an der Benutzerausrüstung.

19. Verfahren nach Anspruch 18, wenn von Anspruch 15 oder 17 abhängig, wobei die oder jede Steuereinheit eine Paketsteuereinheit umfasst.

20. Verfahren nach irgendeinem der vorhergehenden Ansprüche, wobei das Netz eingerichtet ist, um nach dem GPRS-Standard zu arbeiten.

21. Verfahren nach irgendeinem der vorhergehenden Ansprüche, wobei die Benutzerausrüstung eine Mobilstation umfasst.

22. Zellulares Kommunikationsnetz, welches mindestens eine Benutzerausrüstung (8) und eine Vielzahl von Zellen umfasst, wobei das Netz umfasst:
Mittel zum Senden, wenn eine Übergabe der Benutzerausrüstung von einer Ursprungszelle an eine Zielzelle durchgeführt werden soll, von Temporary Block Flow, hiernach als TBF bezeichnet, -Verbindungsinformationen für die Zielzelle von der Ursprungszelle, während der Benutzer mit der Ursprungszelle verknüpft ist, wobei die TBF-Verbindungsinformationen mindestens einen TBF in der Zielzelle definieren, und
wobei die Benutzerausrüstung eingerichtet ist, bei Gebrauch die Zelle, mit der die Benutzerausrüstung verknüpft ist, von der Ursprungszelle auf die Zielzelle zu ändern, wobei die TBF-Verbindungsinformationen es dem Benutzer gestatten, den TBF in der Zielzelle zu verwenden.

## Revendications

1. Procédé de transfert d'un équipement utilisateur (8) depuis une cellule source vers une cellule cible dans un réseau de communication cellulaire, ledit procédé comprenant les étapes consistant à :
envoyer à l'utilisateur, depuis la source, des informations de liaison de flux de bloc temporaire, dans la suite de la présente désigné par TBF, pour la cellule cible, tandis que l'utilisateur est associé à ladite cellule source, lesdites informations de liaison TBF définissant au moins un TBF dans ladite cellule cible ; et
changer la cellule à laquelle l'équipement utilisateur est associé, de la cellule source à la cellule cible, moyennant quoi les informations de liaison TBF permettent au dit utilisateur d'utiliser ledit TBF dans ladite cellule cible.

2. Procédé tel que revendiqué dans la revendication 1, dans lequel lesdites informations de liaison sont fournies pour au moins un flux parmi un flux montant et un flux descendant TBF.

3. Procédé tel que revendiqué dans la revendication 1 ou la revendication 2, dans lequel ledit équipement utilisateur change de la cellule source à la cellule cible, le TBF de la cellule source est libéré et le TBF de la cellule cible est établi.

4. Procédé tel que revendiqué dans l'une quelconque des revendications précédentes, dans lequel lesdites informations de liaison comprennent des informations identifiant au moins une période de temps au cours de laquelle ledit équipement utilisateur est autorisé à transmettre dans ladite cellule cible.

5. Procédé tel que revendiqué dans la revendication 4, dans lequel ladite transmission sur ladite période de temps consiste à envoyer des salves d'accès pour acquérir des informations anticipées de synchronisation valides.

6. Procédé tel que revendiqué dans la revendication 4 ou la revendication 5, dans lequel au moins une période de temps est réservée dans un canal de transmission de données par paquets.

7. Procédé tel que revendiqué dans les revendications 4, 5 ou 6, dans lequel lesdites informations identifiant au moins une période de temps comprennent au moins un des éléments suivants : une RRBP (période de bloc réservée relative), un USF (indicateur d'état d'utilisateur), une allocation fixe.

8. Procédé tel que revendiqué dans l'une quelconque des revendications précédentes, dans lequel ledit équipement utilisateur est arrangé pour recevoir des informations anticipées de synchronisation de ladite cellule cible.

9. Procédé tel que revendiqué dans l'une quelconque des revendications précédentes, dans lequel lesdites informations TBF sont contenues dans un message d'affectation de protocole de contrôle de liaison radio et/ou de contrôle d'accès au support.

10. Procédé tel que revendiqué dans l'une quelconque des revendications précédentes, dans lequel lesdites informations TBF sont contenues dans un message d'affectation.

11. Procédé tel que revendiqué dans l'une quelconque des revendications précédentes, dans lequel lesdites informations de liaison sont contenues dans un message de demande de changement de cellule de paquet.

12. Procédé tel que revendiqué dans l'une quelconque des revendications précédentes, comprenant l'étape consistant à ce que l'équipement utilisateur communique avec la cellule source via au moins deux canaux, et lesdites informations de liaison permettent au moins à un canal d'être établi dans ladite cellule cible.

13. Procédé tel que revendiqué dans la revendication 12, dans lequel au moins un desdits canaux est un canal partagé.

14. Procédé tel que revendiqué dans la revendication 12 ou la revendication 13, dans lequel au moins un desdits canaux est un canal dédié.

15. Procédé tel que revendiqué dans l'une quelconque des revendications précédentes, dans lequel la cellule cible et la cellule source sont contrôlées par une unité de contrôle commune.

16. Procédé tel que revendiqué dans l'une quelconque des revendications précédentes, dans lequel les informations TBF pour la cellule source sont reconfigurées pour fournir les informations TBF pour la cellule cible.

17. Procédé tel que revendiqué dans l'une quelconque des revendications 1 à 14, dans lequel ladite cellule cible et ladite cellule source sont contrôlées par différentes unités de contrôle.

18. Procédé tel que revendiqué dans l'une quelconque des revendications précédentes, comprenant l'envoi des paquets et/ou la réception des paquets au niveau de l'équipement utilisateur.

19. Procédé tel que revendiqué dans la revendication 18, lorsque dépendante de la revendication 15 ou à la revendication 17, dans lequel l'unité de contrôle, ou chaque unité de contrôle, comprend une unité de contrôle de paquet.

20. Procédé tel que revendiqué dans l'une quelconque des revendications précédentes, dans lequel ledit réseau est arrangé pour opérer en accord avec le standard GPRS.

21. Procédé tel que revendiqué dans l'une quelconque des revendications précédentes, dans lequel ledit équipement utilisateur comprend une station mobile.

22. Réseau de communication cellulaire comprenant au moins un équipement utilisateur (8) et une pluralité de cellules, ledit réseau comprenant :
des moyens pour envoyer, lorsque l'équipement utilisateur est transféré d'une cellule source vers une cellule cible, des informations de liaison de flux de bloc temporaire, dans la suite de la présente désigné par TBF, pour la cellule cible depuis la cellule source, tandis que l'utilisateur est associé à ladite cellule source, lesdites informations de liaison TBF définissant au moins un TBF dans ladite cellule cible ; et
l'équipement utilisateur étant arrangé, en utilisation, pour changer la cellule à laquelle l'équipement utilisateur est associé, de la cellule source à la cellule cible, moyennant quoi les informations de liaison TBF permettent au dit utilisateur d'utiliser ledit TBF dans ladite cellule cible.
